# EUROPEAN PATENT SPECIFICATION

(11) **EP 1 210 799 B1**
(45) Date of publication and mention of the grant of the patent: **28.07.2004**
(21) Application number: 00971276.1
(22) Date of filing: 08.09.2000
(51) Int. Cl.: H04L 12/58

(54) **METHOD FOR E-MAIL COMMUNICATION, APPARATUS THEREFOR AND USE OF SAID METHOD AND APPARATUS FOR ELECTRONIC METERING AND FOR HOME AUTOMATION**
VERFAHREN FÜR ELEKTRONISCHE POST (E-MAIL), EIN APPARAT HIERFÜR SOWIE ANWENDUNG DES BESAGTEN VERFAHRENS UND DES APPARATES FÜR ELEKTRONISCHES MESSEN UND HAUSTECHNIK
PROCEDE DE COMMUNICATION PAR COURRIER ELECTRONIQUE, APPAREIL ASSOCIE ET UTILISATION DUDIT PROCEDE ET DUDIT APPAREIL POUR LE COMPTAGE ELECTRONIQUE ET LA DOMOTIQUE

(30) Priority: 08.09.1999 EP 99202880
(43) Date of publication of application: 05.06.2002
(73) Proprietor: Van Dalen Management B.V., 5581 GM Waalre (NL)
(72) Inventor: VAN DALEN, Pieter, Adriaan, NL-5581 GM Waalre (NL)
(74) Representative: Brants, Johan Philippe Emile
(86) International application number: PCT/EP2000/008757
(87) International publication number: WO 2001/019041

(56) References cited:
- EP-A- 0 915 595
- DE-A- 19 713 240
- US-A- 4 773 005
- US-A- 5 805 298
- US-A- 5 974 453
- STURM, PETER: "Briefkasten einmal anders: Datenbanken für jedermann" FUNKSCHAU 24/1985, no. 24, November 1995 (1995-11), pages 60-62, XP002131553
- STEVENS ET AL: "TCP/IP ILLUSTRATED, Vol. 1. THE PROTOCOLS" PROFESSIONAL COMPUTING SERIES,US,READING, MA: ADDISON WESLEY, 1994, pages 215-217, XP002100788 ISBN: 0-201-63346-9

## Description

### Field of the invention

The invention relates to a method for e-mail communication, apparatus therefor and use of said method and apparatus for electronic messaging, remote reading of electronic mail and messages, for electronic metering, home automation; electronic payment by cheques and banking applications, and electronic storage of documents.

In a first aspect the present invention relates to a method and apparatus which allows Internet-type-communication between users connected via publicly switched telephone networks, both wired and wireless, wherein the Internet as a transport medium is not required.

The primary application thereof is electronic mail. However, the method and apparatus allow many other Internet-type applications. In particular nine important applications have been addressed here:
- Electronic messaging (similar to the so-called SMS via GSM, however, without the intermediary of a service provider),
- Remote electronic read-out of electronic mail and messages,
- Electronic meter-reading (an application of importance for e.g. utility companies),
- Electronic payment of cheques (and electronic banking applications),
- Electronic storage and archival of documents (to be extended to making financial and other surveys),
- Home / building automation applications,
- Storage of e-mail messages on a storage device, such as smart cards,,
- Transmittal of data files as e-mail messages, and
- Dispatching and messaging services.

New is that the method and the apparatus allow e-mail transmission between two addresses connected to the traditional public switched telephone network. New is also that signals or data, produced by devices (e.g. utility meters) can be packaged as e-mail messages and transmitted via telephony networks, and/or the Internet. The new inventive applications based on this new e-messaging concept, are:
1. All e-mail based messaging modalities, including remote reading and payment/banking applications;
2. Remote meter-reading;
3. Remote control (e.g. switching on/off) of devices/appliances connected to a home/building "intra-network" (As "intra-network" in our invention serves the mains power network).
4. Electronic storage, archival and retrieval of documents. The electronically received documents and messages can be stored in a special apparatus connected to the main embodiment of the invention. The special apparatus is a storage database which archives, and from which retrieval of documents is easily possible (in addition hard copy documents can be stored via the intermediary of a scanner).

The preferred embodiment of the invention in this application is referred to as TeleMail method and TeleMail device.

The newly invented e-mail communication modality makes also electronic messaging quite convenient. The invention implies that the messaging method now applied via GSM telephony can be carried out instantaneously without the intermediary of a service provider. Furthermore, such electronic messaging can be applied between any phone-fixed or wireless - equiped with a screen.

A second aspect of the invention relates to a system and method of remotely collecting metering information from customer premises by making use of Internet technology, in combination with the TeleMail concept.

A third aspect of the present invention relates to a system and method of performing home automation functions as a TeleMail-based application. The TeleMail device is used to control a home automation network.

A fourth aspect of the invention relates to a system and method of performing electronic banking and payment functions as a TeleMail-based application. The TeleMail device is extended with a credit-card / chipcard reader. The credit-card / chipcard, made available by an institution (e.g. financial) contains proprietary information (codes, security, connections) to facilitate and secure payments and transactions. The credit-card / chipcard may also contain a restricted number of cheques or transaction forms.

Dispatching of (secured) payments may then proceed electronically to the recipient party.

For reception of payments the TeleMail device will be equiped with a dedicated device which can store received payments / cheques, which payments / cheques can subsequently be communicated to the desired institution.

A fifth aspect of the invention relates to a system and method of archiving and retrieving electronically received documents. The storage device can be connected as a dedicated peripheral unit. Documents to be stored can be labelled, and retrieved as labelled.

The storage device can similarly also handle archival and retrieval of hard-copy documents which are stored via the intermediary of an electronic scanner to be controlled by the TeleMail unit.

A sixth aspect of the invention relates to a system whereby as a special retrieving application a home bookkeeping system may be developed.

A seventh aspect of the invention relates to a system and method for storing e-mail messages or other digital information which has been received/stored by the TeleMail device, on a storage device such as smart cards (or other for mobile use practical storage media). The device according to the invention is extendable with a smart card reader. Such smart card stored information can be conveniently used in the case of e.g. cinema/train reservations or e-commerce applications.

An eighth aspect of the invention relates to a system and method to transmit data files as e-mail messages, thereby offering an alternative to proprietary data logging systems.

A ninth aspect of the invention relates to a system and method for dispatching and messaging services, to be applied for instance for truck fleet management. The invention in combination with wireless networks can be an alternative to already existing proprietary radiographic methods.

### Background of the invention

Currently, communication via e-mail by users which are not permanently connected to the Internet (e.g. homes, small offices) is only possible by making use of the services provided by internet Service Providers (ISPs). US 5 805 298 A discloses a communications device that transmits and receives information in accordance with both facsimile and electronic mail communications protocols which make use of the Internet.

EP 0 915 595 A discloses an accessing system for a network which includes a plurality of information units and a center unit which stores electronic mails from remote places or other electronic information for the client and performs calculations and processes of information for the client.

There are two main disadvantages of the prior art:
sending and receiving e-mail can only be done by making use of a computer, and by accessing the Internet via the server of the ISP;
arrival of new e-mail messages can only be detected by logging in to the server of the ISP.

The first item makes e-mail communication unattractive to many potential users, since a computer poses a relatively large investment, and because still many people find a computer hard to use (even when the computer is fully configured by the vendor).

The second item also makes e-mail via ISPs unattractive, because some time-consuming steps need to be taken to detect the arrival of new (unread) e-mail messages:
- booting the personal computer,
- invoking the operating system (e.g. Microsoft Windows 98);
- starting Internet application software (e.g. Netscape);
- connecting and logging in to the internet server.

When no new e-mail messages have arrived, this effort has been in vain.

To avoid these difficulties in the prior art, it would be desirable to provide a method and apparatus which makes e-mail communication as easily applicable and intuitive to use as, for example, telephone and facsimile communication, and which does not require involvement of third parties (e.g. an Internet Service Provider), without ruling out the possibility of Internet communication in the conventional manner (i.e. via an Internet Service Provider).

The invention provides therefor a method according to claim 1.

Preferred embodiments of the method are given in claims 2 and 3. The invention is further related to a method according to claims 4 and 5. The apparatuses of the invention are given in claims 6 to 8.

Regarding the second aspect, currently, collection of metering information (e.g. by the electricity company) is either done by persons who visit the customer location in order to read the numbers on the meter, or the customers themselves report the numbers periodically. In the latter case, the numbers still need to be verified by officials of the utility company every once in a while. This has two major disadvantages:
collection of metering information is labor-intensive and therefore costly;
the metering information cannot be used for load monitoring and anticipation;
a need exists to provide a method and system which allows utility companies to remotely collect metering information from the customer premises which ― depending on the sampling frequency - can also be used for operations management purposes.

In the third aspect an interesting application of the Telemail device can be developed, in connection with the mains power network, which can function as a home automation network.

In the following it is described how the TeleMail device can operate - via signals transmitted along the power network - various appliances in a home or a building. (N.B. The term appliance is used in the most general sense of the word. It may mean a domestic appliance, light bulb, electronic switch, heating system, etc.)

Consequently the following needs are fulfilled:
1. a person who finds himself outside his home / building can switch on/off appliances by sending the relevant information message(s) to his TeleMail device (Either using e.g. another TeleMail device, or e.g. a programmed Palmtop device);
2. the TeleMail device transmits the signal in question to the particular appliances, which will then react (e.g. switch on/off).

### Summary of the invention

The present invention is a method and apparatus (consisting of hardware, firmware, and software) for establishing e-mail communication between two users/devices which both have access to the Public Switched Telephone Network (PSTN). The apparatus has sender and receiver functions.

An essential feature of the invention is the use of TCP/IP for communication within the realm of the Public Switched Telephone Network between two TeleMail devices which do not have to be connected to the Internet. This implies that Internet protocol suite applications can be realized in conventional networks. It also means that for a number of applications Internet connectivity and conventional connectivity become merely complementary.

As a sender, the appliance offers the possibility of composing, editing, opening, storing and sending e-mail messages through a Graphical User Interface (GUI) application. The messages have a TCP/IP protocol suite compliant structure and format. This includes the possibility of an attachment of data files to the e-mail message.

As a sender, the appliance is capable of establishing TCP/IP communication with a similar and compatible receiving device over the PSTN (either through a modem or directly over an ISDN), according to the Point-to-Point Protocol (PPP). Where IP addresses are needed for PPP and TCP/IP communication, dummy addresses are derived from the communicating parties' telephone numbers which are stored in both the sender and receiver apparatus. In a similar manner wireless communication could be realized (e.g. by using GSM as network interface).

As a receiver, the appliance is able to respond to an incoming telephone call by going off-hook, and establishing TCP/IP communication with the sender apparatus. Once the data communication is established, the e-mail message can be transferred to the receiver device according to the Simple Mail Transfer Protocol (SMTP) or another internet Suite Protocol. The apparatus will be in stand-by mode as long as it is switched on.

As a receiver, the apparatus is able to store incoming e-mail messages and activate a visual and/or audible indicator that new e-mail has arrived.

As a receiver the apparatus is able to visually present e-mail messages through a Graphical User interface application. This includes presentation of data files which can be attached to the e-mail message.

The apparatus can be realized as a stand-alone unit which accomodates all the functions needed to fulfil the service of the present invention. Alternatively, the apparatus can be realized as a peripheral device to a computer. Such peripheral would accomodate only those functions which are needed to receive, send and store incoming e-mail messages.

Since the apparatus is conceived to communicate via TCP/IP channels, it can also be employed to make use of other Internet applications, such as World Wide Web (WWW), File Transfer Protocol (FTP), etc.. For such applications, the user would need to log on to the Internet server of an ISP. Connected to the Internet, the user can also make use of the conventional e-mail service, as offered by an ISP.

Because the apparatus is able to accept calls and to receive e-mail messages autonomously, the apparatus can also be called by Internet Service Providers to transfer newly arrived e-mail messages to the premises of the e-mail addressee. Thus, it can contribute to a reduction of required disk space on the server of the ISP, and alert the addressee almost instantaneously of newly received e-mail.

Other possible TeleMail applications in the information society are given hereunder.

The obvious application is that of sending e-mail via the existing telephone networks between addresses connected to these networks. The physical connection and data link is similar to that used for data communications via telephony, the electronic message is transferred according to the TCP/IP protocol suite (in particular SMTP).

In case of e-commercele-business communication a display device may be required for convenience. Therefor a TV set or other display device would be appropiate.

It is mentioned here that this message transfer via traditional telephone networks is far more secure than via Internet transfer (may be of importance for e.g. messages containing sensitive data).

The user of a TeleMail device can communicate to Internet addresses, via telephoning an Internet access provider. For e-commerce/e-business applications, a TV set or another display device could be used when the communication requires visualization.

Businesses/Institutions can communicate with TeleMail devices using either Internet or traditional network communications, on the basis of the TCP/IP communication, and the message forwarding included in the TeleMail concept.

This may become quite advantageous e.g. in the following cases:
1. Each physical address, accessible via telephone connectivity can receive e-mail and thus replace traditional mail. This may lead to significant cost savings for businesses/organizations due to the 'short-circuiting' of the traditional mailing system.
2. Each physical address, accessible via telephone connectivity, can be contacted by utility companies for (periodic) meter-reading. As an instance this may be of advantage for electricity companies' load management system and program responsibility. Obviously this will lead to significant cost savings. This application may require special arrangements to safeguard privacy (see the second aspect of the present invention).
3. The Telemail device can be used as a central server of a home "intranetwork". Such TeleMail device can store a website. Consequently, each appliance at a physical address, connected to the home "intranetwork" is accessible via telephone connectivity, and can be operated via the public switched telephone network by interacting between its TeleMail website and a device connected elsewhere to the telephone network (e.g. palmtop or other TeleMail device). Obviously this will lead to a straightforward operation of appliances in a home (or building) and somebody operating from the outside.

Call-centers are increasingly being contacted also via e-mail. The TeleMail device also provides call-center communication. Also for the functioning of the call-center the TeleMail connectivity is advantageous, since confirmations of agreements can be forwarded on-line.

Businesses are able to improve direct marketing methods since they can combine within their ICT systems results of their data mining and contact customers via TeleMail efficiently and effectively.

Since TeleMail devices can be used like telephony devices, messages can be delivered anywhere/anytime, much more readily than in case of "conventional" e-mail communication which has to go via a PC.

For Businesses/Institutions significant financial benefits may develop since the number required of software licences could be reduced drastically.

The second aspect of the present invention is a method and system according to claims 9-13 (consisting of hardware, firmware, and software) for establishing e-mail communication through the Public Switched Telephone Network (PSTN) between a device installed at the customer premises (called MeterNet Box) and a host at the premises of the utility company (called MeterNet Host), which interfaces with the server of the utility company. The devices at both ends have sender and receiver capabilities, and both have access to the PSTN.

The data communication between Box and Host is established and maintained according to the TCP/IP protocol suite (PPP in particular), the physical connection being provided through a modem or ISDN. The data communication provides a full-duplex path to the applications at both ends.

Two scenarios apply for the operation of the present invention. In the first scenario, the MeterNet Box at the customer location is polled by the MeterNet Host to retrieve metering information (e.g. at regular intervals for billing purposes). In the second scenario, the MeterNet Box at the customer location autonomously establishes a connection to the MeterNet Host (e.g. for status and error reporting, or upon detection of events specified by the utility company). To avoid costs at the customers expense in the latter case, the utility company may provide a toll-free number for dial-in connections.

Once the data communication between Box and Host (or vice versa) has been established, the Box application can exchange information with the Host application. To identify itself to the Host application, the Box is assigned a unique 32-bit identifier which is also used as (alias) IP address for protocol purposes.

Since the utility company can access the metering information without knowledge of the customer, it may be desirable or even required to send a notification to the customer that the information has been collected (either via electronic or postal mail).

The third aspect TeleControl functionality is an application based on the TeleMail platform according to claims 14-18. Two major functions can be distinguished within the TeleControl application:
1. centralized, user-definable control over accessible devices;
2. providing remote access to the above function.

The first function is realized by connecting a home automation control unit to one of the general-purpose interfaces of the TeleMail device. The control-unit can address other units through a power-line modem. These units in their turn can control devices such as light bulbs, switches, heating systems, domestic appliances, alarm systems, etc.. Alternatively, the control unit can be integrated in the TeleMail device enclosure.

The user can access the TeleControl functionality through a graphical user interface (GUI) which runs as a TeleMail application. For example, the graphical user interface consists mainly of an HTML file, which can be presented with any compliant web browser application. Through the user interface, the user can invoke Common Gateway Interface (CGI) processes on the TeleMail device, which in their turn control a target device.

Remote access to the TeleControl (second function) functionality is provided by calling the TeleMail device and loading the TeleControl HTML file into a web browser at the remote location. A personal computer with modem or other TeleMail device can be used for this purpose.

### Brief Description of the Drawings

In the drawings three sets of figures are given. The same reference numbers have been used for each of the separate sets 1, 2 and 3. 1, 2 and 3 respectively are illustrations of embodiments of the first, second and third aspect of the invention.
Figure 1A is a functional block diagram of the TeleMail system according to the present invention, including two (2) TeleMail devices [T1] and [T2] at the user premises, and a TeleMail device [T3] at the premises of an Internet Service Provider, all with access and connected to the Public Switched Telephone Network [PSTN].
Figure 1B is a functional block diagram of an embodiment of a stand-alone TeleMail device [T4], according to the present invention.
Figure 1C is a functional block diagram of an embodiment of a computer-peripheral TeleMail device [T5], according to the present invention.
Figure 1D is a functional block diagram of an embodiment of a TeleMail device [T6] employed for forwarding e-mail messages from the ISP premises to the user premises, according to the present invention.
Figure 1E is an architecture diagram of the TeleMail embedded software [AS1], according to the present invention.
Figure 1F is a functional block diagram of the TeleMail application software [AS2] for forwarding e-mail messages to a TeleMail device by an internet Service Provider, according to the present invention.
Figure 1G is a simplified OSI model representation of the TeleMail communication through an ITU-T I.series compliant Integrated Services Digital Network (ISDN).
Figure 1H is a simplified OSI model representation of the TeleMail communication over an ITU-T V.series compliant modem (e.g. V.32, V.34, V.90) over the Public Switched Telephone Network.
Figure 2A provides an overview of the MeterNet system, according to the present invention, including a number of MeterNet Boxes [M1], [M2] and [M3] at the customer premises, and a MeterNet Host [H1] at the premises of a Utility Company with connection to the Utility Company Server; all devices are connected and have access to the Public Switched Telephone Network [PSTN].
Figure 2B is a functional block diagram of an embodiment of a MeterNet Box [M4], according to the present invention.
Figure 2C is a functional block diagram of an embodiment of a MeterNet Host [H2], according to the present invention.
Figure 2D is a flowchart description of the procedure to collect metering information from a single MeterNet Box.
Figure 2E is a flowchart description of the procedure to report information by a single MeterNet Box to a MeterNet Host
Figure 2F is a simplified OSI model representation of the MeterNet communication over an ITU-T V.series compliant modem (e.g. V.32, V.34, V.90) over the Public Switched Telephone Network.
Figure 2G is a simplified OSI model representation of the MeterNet communication through an ITU-T l.series compliant Integrated Services Digital Network (ISDN).

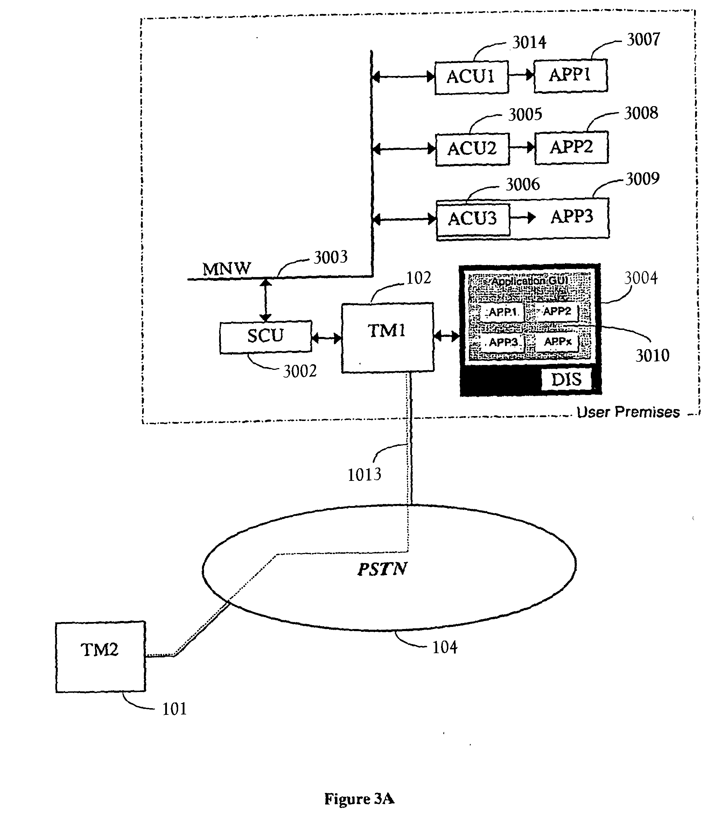

Figure 3A provides an overview of the TeleControl system, according to the present invention, including a set of two TeleMail devices [TM1] and [TM2], a TeleControl System Control Unit [SCU], and a number of Appliance Control Units [ACU1J, [ACU2], and [ACU3]; all control units are connected to the in-house mains network [MNW]. The Appliance Control Units interface with appliances [APP1], [APP2], and [APP3], respectively. An Application Control Unit may also be integrated in the appliance enclosure, as illustrated for [ACU3/APP3]. Both TeleMail units are connected to the Public Switched Telephone Network [PSTN]. Both TeleMail units have a display [DIS] as output device for the TeleControl Graphical User Interface. The display of Telemail device [TM2] is not shown.
Figure 3B is a functional block diagram of an embodiment of a System Control Unit, according to the present invention.
Figure 3C is a functional block diagram of an embodiment of an Appliance Control Unit, according to the present invention.
Figure 3D is an architectural block diagram of the TeleControl application.

### Detailed Description of the Invention

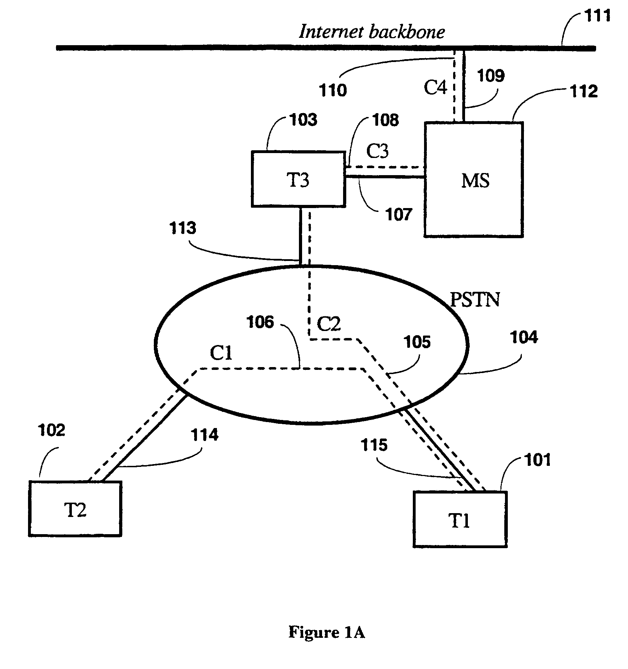

Figure 1A shows two TeleMail communication devices **101** and **102** of the present invention, and the system in which it operates. Both devices have access to the Public Switched Telephone Network (PSTN) **104** through subscriber loops (**114** and **115**). The sender device **101** opens a switched telephone connection **106** through the PSTN 104. Once the connection is established, transfer of the electronic data between the sender and receiver applications commences.

In Figure **1A,** a TeleMail device **103** which is employed for forwarding e-mail messages from a Mail Server **112** to a TeleMail device **101** at the customer premises is also depicted. In this case the TeleMail device **101** functions as a receiver. Upon arrival of an e-mail message destined for a user who has a TeleMail device, the e-mail message is forwarded to the TeleMail device **103** at the premises of the Internet Service Provider (ISP). This TeleMail device maintains a database with the telephone numbers of all addressees who make use of the e-mail forwarding service. The TeleMail device **103** opens a switched telephone connection **105** through the PSTN **104.** Once the connection is established, transfer of the electronic mail from the ISP to the receiver application commences.

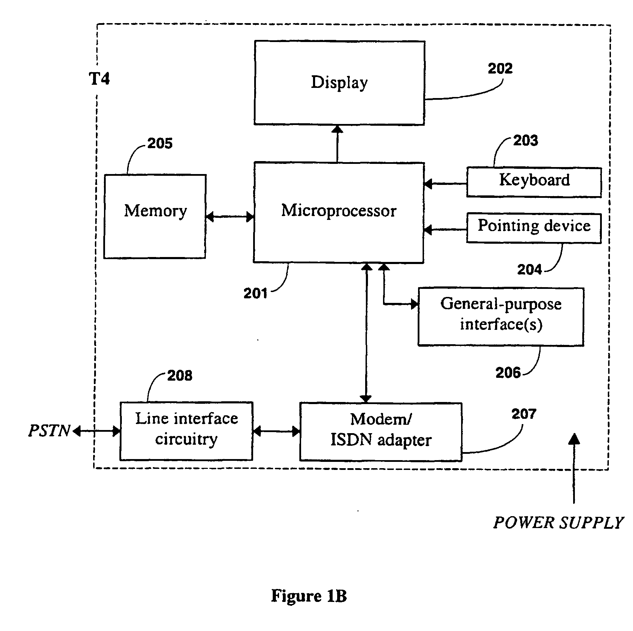

A block diagram of a stand-alone embodiment of a TeleMail device, according to the present invention, is shown in Figure 1B. Apart from the data transmission and line interfacing, all functions are performed by a microprocessor **201**. The microprocessor is supported by memory **205**, which comprises both volatile and non-volatile memory. The microprocessor provides its output on a display **202**. The user provides input through a keyboard **203** and a pointing device **204**. When a touch-screen is used as display, both keyboard and pointing device can be incorporated in the touch-screen. The microprocessor **201** has some general purpose interfaces (e.g. serial and parallel ports, USB) at its disposal which can be used to add peripherals (e.g. a printer, a Web camera, a joystick) as enhancement to the TeleMail functionality.

The line interface circuitry **208** is able to detect an incoming call, upon which it alerts the microprocessor. Thus, the TeleMail device is able to act as a receiver.

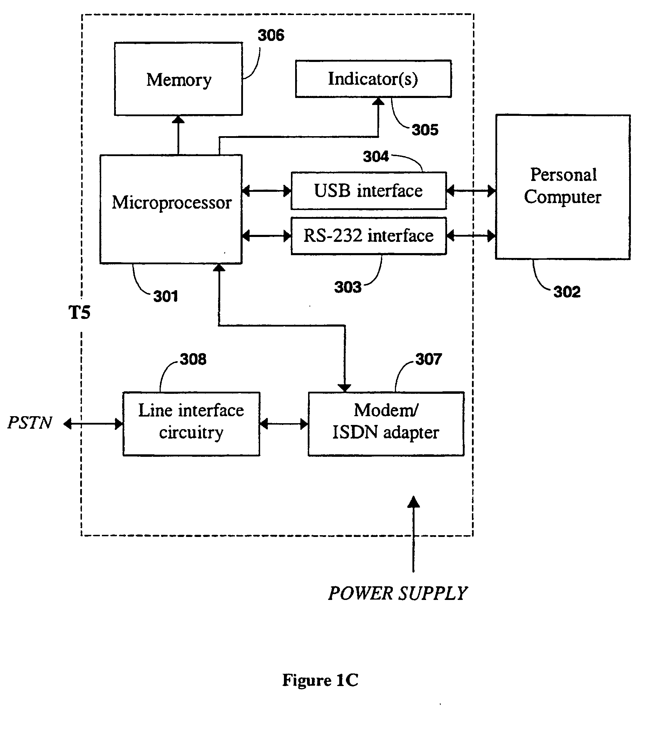

A block diagram of a computer-peripheral embodiment of a TeleMail device, according to the present invention, is shown in Figure 1C. Apart from the data transmission 307 and line interfacing **308**, all functions are performed by a microprocessor **301**. The microprocessor is supported by memory **306**, which comprises both volatile and non-volatile memory. The microprocessor provides status information through perceptible (e.g. visual and/or audible) indicators **305.** The computer-peripheral TeleMail device is configured by a host Personal Computer (PC) **302** through one of the interfaces **303** or **304.** A TeleMail host application on the host PC **302** provides the (graphical) user interface with the user. E-mail message composition is done on the host PC. The outgoing messages are transferred from the host PC to the computer-peripheral TeleMail device through one of the interfaces **303** or **304.**

Since the computer-peripheral TeleMail device has its own power supply, it is able to receive incoming messages, independent of the host PC, in particular also when the PC is disconnected or powered down. Incoming messages are stored in memory **306,** until the connection to the host PC **302** is (re)established. Once the connection is (re)established, the received messages are transferred to host PC 302 through one of the interfaces 303 or 304. Thus, the computer-peripheral TeleMail device can be seen as an enhanced (external) modem, with autonomous message receiving capabilities.

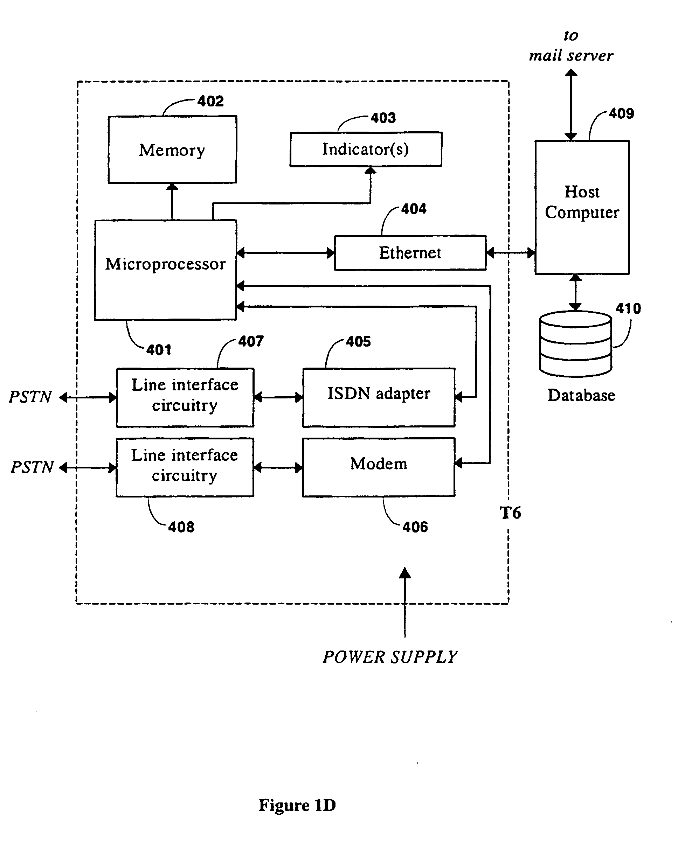

A block diagram of a TeleMail device which is employed at the premises of an Intemet Service Provider (ISP) for forwarding of e-mail messages to a TeleMail device at the user premises, according to the present invention, is shown in Figure 1D. The main difference with the computer-peripheral TeleMail device described above (Figure 1C) consists of the Ethemet interface with the host computer, and the host application software. Also, the ISP TeleMail device offers both an analog (modem) and digital (ISDN) telephone line interface.

Apart from the data transmission **405/406** and line interfacing **407/408,** all functions are performed by a microprocessor **401.** The microprocessor is supported by memory **402,** which comprises both volatile and non-volatile memory. The microprocessor provides status information through visual and/or audible indicators **403.** The ISP TeleMail device is configured by a host computer (PC) **409** through the Ethernet interface **404.**

E-mails which arrive at the mail server of the ISP are transferred to the host computer **409** when the addressee makes use of the TeleMail message forwarding service. A database application on the host computer maintains a TeleMail database **410** of all e-mail addressees who make use of the TeleMail message forwarding service. The host computer retrieves the telephone number, and the line interface type (analog or ISDN) of the addressee TeleMail device from the TeleMail database. Along with the telephone number and line interface type information, the e-mail message is transferred to the ISP TeleMail device which transmits it to the TeleMail device of the e-mail addressee.

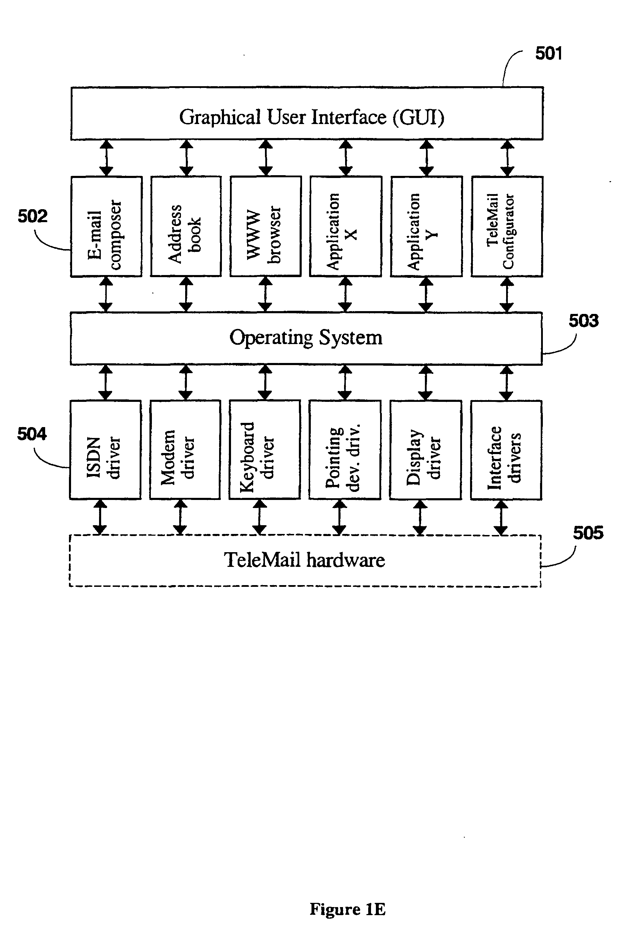

An architecture block diagram of the TeleMail software, according to the present invention, is shown in Figure 1E. The TeleMail software consists of a Graphical User Interface (GUI) **501**, application software **502,** an operating system **503,** and hardware drivers **504.** Although primarily intended for e-mail communication, other applications can be installed as enhancements, which may require that the TeleMail is equipped with additional periherals. For example, if a web camera is connected to the TeleMail devices at both ends (e.g. T1 and T2 in Figure 1A), it can be used for low-bandwidth video conferencing. Printing and scanning devices, addressed through the general purpose interfaces, can also provide added functionality.

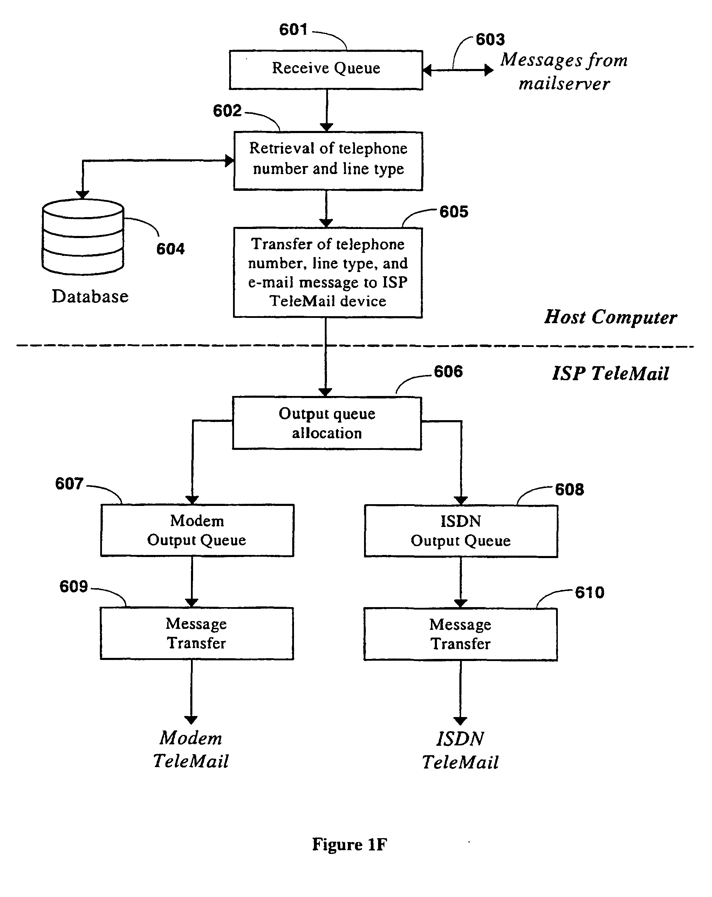

A functional block diagram of the ISP TeleMail database software for forwarding of e-mail messages to a TeleMail device at the user premises, according to the present invention, is shown in Figure 1F. The software consists of two subsystems: a database application on the host computer, and an embedded TeleMail application on the processor of the ISP TeleMail device.

Messages which are forwarded by the ISP mail server to the ISP TeleMail host computer through interface **603,** are fed into a first-in first-out (FIFO) receive queue **601,** to avoid information loss in case of bursty message arrival. The size of this queue can be changed dynamically. The e-mail messages are read from the receive queue (function **602),** after which the telephone number and line interface type (modem or ISDN) is retrieved from a TeleMail database **604.** The e-mail message, along with the telephone number and line type of the addressee TeleMail device is then transferred to the ISP TeleMail device for further processing.

The embedded ISP TeleMail software assigns the message to an output queue, depending on the line interface type (function **606**). For addressees with an analog (modem) line interface, the message is fed into the Modem Output Queue **607,** after which it is physically transferred to the addressee TeleMail device (function **609).** For addressees with a digital (ISDN) line interface, the message is fed into the ISDN Output Queue **608,** after which it is physically transferred to the addressee TeleMail device (function **610).**

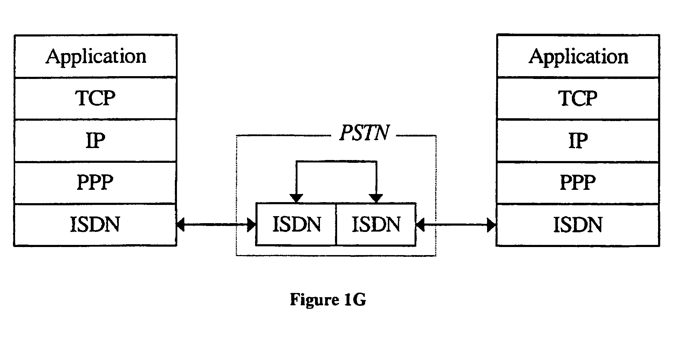

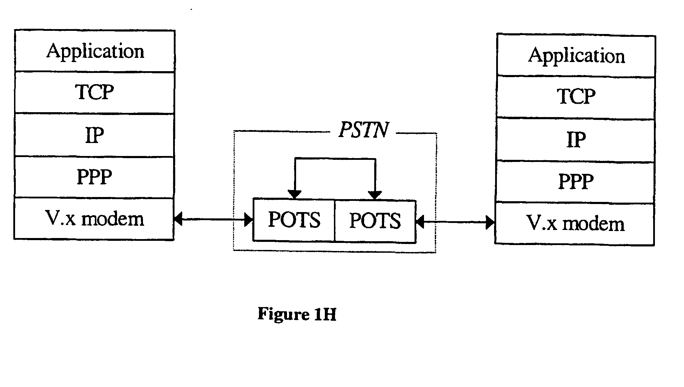

Depending on the type of subscriber loop (POTS or ISDN), the protocol stack differs. Figure 1 G shows the protocol stack for POTS, Figure 1H shows the protocol stack for ISDN. The only difference lies in the physical layer which is a modem in case of POTS, or an ISDN interface directly in case of an ISDN.

Where IP addresses are needed for TCP/IP and PPP communication between two TeleMail devices which are not connected to the Internet, they are derived from the telephone number as follows:
I. The decimal telephone number (including area and country codes) is converted to a hexadecimal identifier;
II. The least significant 4 (four) bytes of the converted telephone number are used as alias IP address.
III. If the converted telephone number has a length of less than 4 bytes, it is extended with leading zeros.

For communication with an Internet server, the TeleMail device will be assigned a temporary IP address for the duration of the connection from an address pool maintained by the Internet server (according to the PPP-DHCP protocol).

In DE 197 13 240 A an address assignment system is described where periferals propose a totally random address which is then confirmed or must be re-proposed until confirmation. Address assignment by telephone number is more efficient.

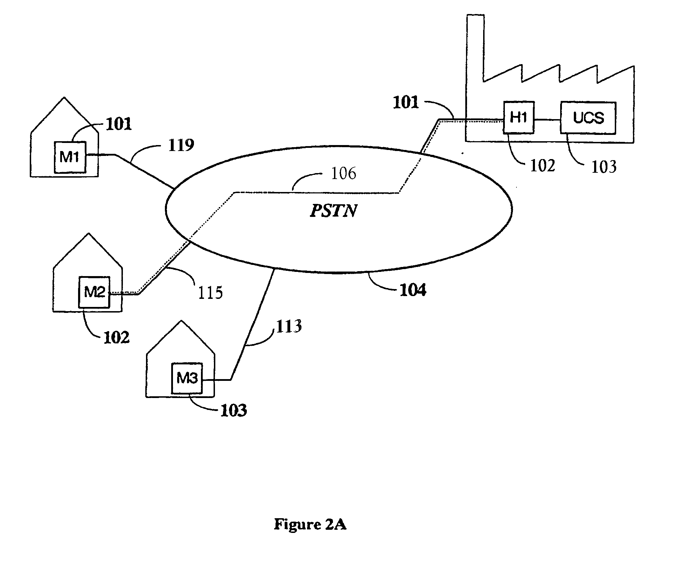

A number of MeterNet Box **(101, 102, 103)** and a MeterNet Host device **(105)** of the present invention, and the system in which it operates is shown in Figure 2A. All devices have access to the Public Switched Telephone Network (PSTN) **104** through subscriber loops (**113-115**). The MeterNet Host device **102** also communicates with a server computer of the utility company (**703**). In order to establish communication between the MeterNet Box **102** and the MeterNet Host **105,** either device can open a switched telephone connection **106** through the PSTN **104.** Once the connection is established, transfer of the electronic data between the sender and receiver applications commences.

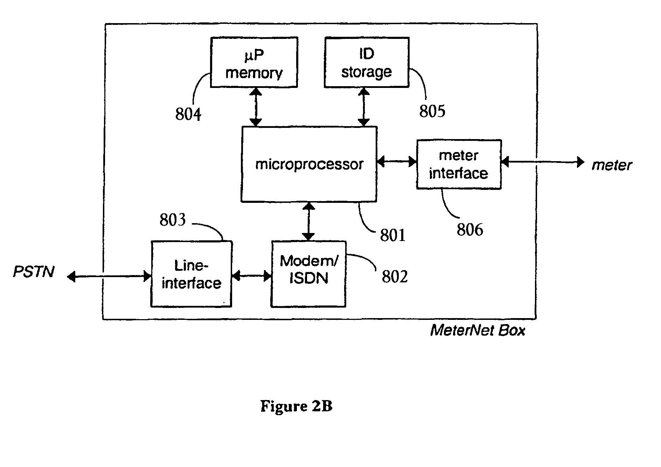

A block diagram of an embodiment of a MeterNet Box device, according to the present invention, is shown in Figure 2B. Apart from the data transmission **802** and line interfacing **803**, all functions are performed by a microprocessor **801**. The communication port **802/803** can be an analog modem interface or a digital ISDN interface. The microprocessor is supported by memory **804**, which comprises both volatile and non-volatile memory. The microprocessor **801** has a meter interface **806** at its disposal which can be used to collect information from a compatibte meter (not depicted). The line interface circuitry **803** is able to detect an incoming call upon which it alerts the microprocessor **801**. The MeterNet Box also comprises a storage unit **805** for a unique permanent 32-bit identifier, which also serves as alias IP address during TCP/IP communication.

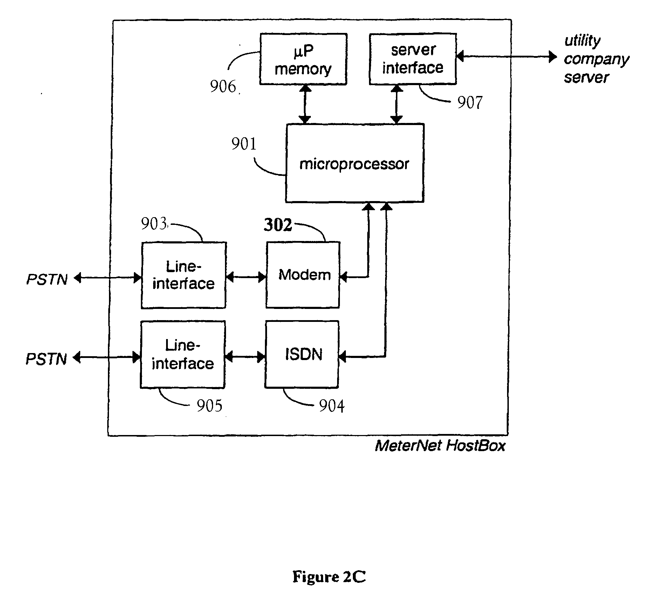

A block diagram of an embodiment of a MeterNet Host device, according to the present invention, is shown in Figure 2C. Functionally, the MeterNet Host has two communication ports at its disposal: one for (analog) modem communication **902/903**, one for (digital) ISDN communication **904/905**. Depending on to which type of subscriber loop the MeterNet Box device is connected, the compatible communication port is selected. Physically, a MeterNet Host can comprise an arbitrary number of either port type. Apart from the data transmission **902/904** and line interfacing **903/905**, all functions are performed by a microprocessor **901**. The microprocessor is supported by memory **906**, which comprises both volatile and non-volatile memory. The microcontroller communicates with a server computer over a server interface **907**. The MeterNet Host can either be controlled and configured by software on the server computer, or provide a dedicated interface for this purpose.

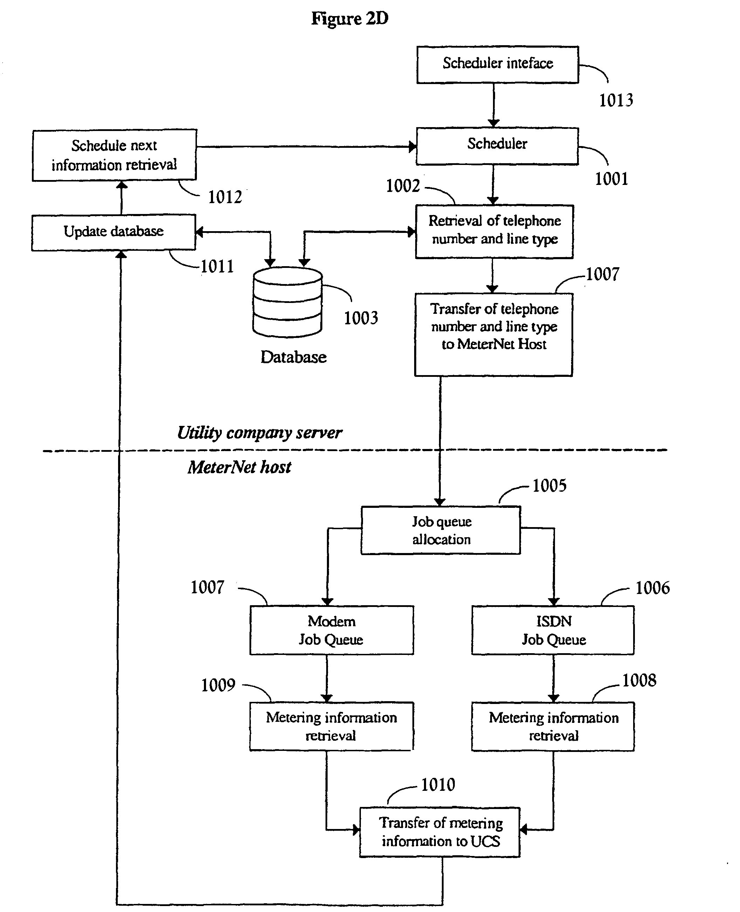

A flowchart description of the procedure to collect metering information from a MeterNet Box by a MeterNet Host, according to the present invention, is shown in Figure 2D. Most likely the procedure is executed mainly by a software system. Functionally and physically, the procedure to retrieve information from a MeterNet Box by a MeterNet Host is divided over two subsystems: a database application on the server computer, and embedded software executed by the microprocessor of the MeterNet Host device. Both subsystems communicate with each other through the server interface of the MeterNet Host device. Please refer to the above description of Figure 2C for details.

The core function of the MeterNet database application consists of a scheduler **1001**. The scheduler **1001** is responsible for servicing requests to collect information of a MeterNet Box device. The request can be either periodically at user-definable intervals, upon detection of user-definable conditions, or at the user's immediate request. A scheduler interface **1013** provides access to the pending requests (e.g. for cancellation of a request). Once a request is serviced it is referred to as a job. A job also has knowledge of the information that needs to be collected from the addressed MeterNet Box A job starts (step **1002**) with the retrieval of a telephone number and line interface type (POTS or ISDN) of the addressed MeterNet Box from a database **1003**. Both parameters are then transferred to the MeterNet Host device for further processing (step **1004**). In the MeterNet Host the job is fed into a job queue, depending on the line type of the addressed MeterNet Box (step **1005**). For each line type, an independent job queue is provided.

From the job queue, the jobs are fetched by the next step in the procedure (steps **1008** and **1009**, for digital and analog line interfaces, respectively). In this step, the MeterNet Host opens a switched telephone connection to the addressed MeterNet Box, requests and receives the information from the addressed MeterNet Box, and terminates the connection. After succesful collection of the requested information, the information is transferred to the server (step **1010**). The server updates the database with the newly acquired information (step **1011**), and schedules the next request (step **1012**).

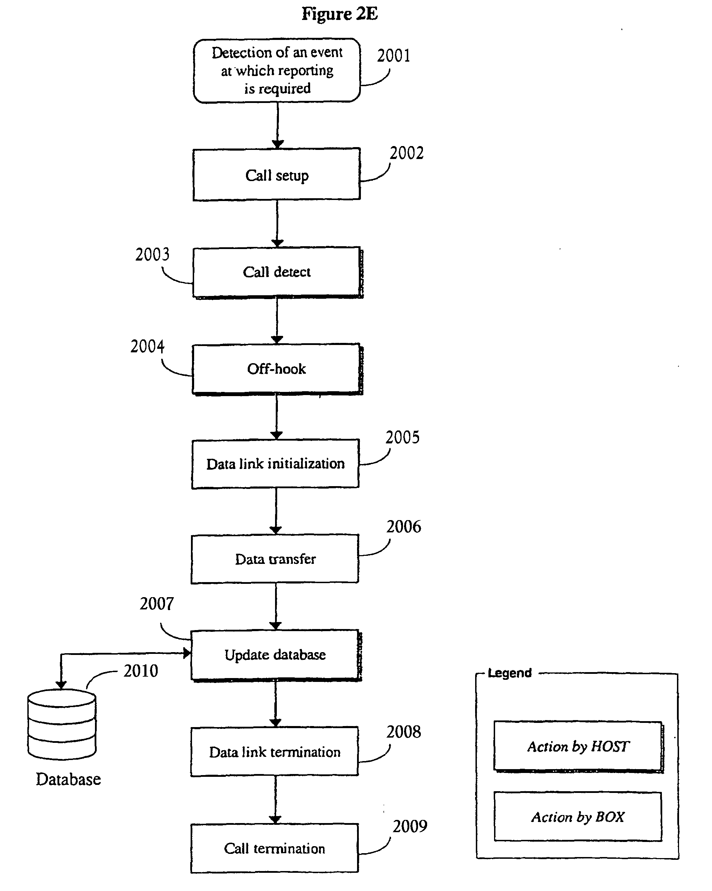

A flowchart description of the procedure to report metering information by a MeterNet Box to a MeterNet Host, according to the present invention, is shown in Figure 2E. Upon detection of an event which was marked as requiring a report to the MeterNet Host (event **2001**), the MeterNet Box opens a switched telephone connection to the MeterNet Host (step **2002**). The MeterNet Host detects the incoming call (step **2003**), and responds by going off-hook (step **2004**), after which the data link is initialized (step **2005**) in accordance with the Point-to-Point Protocol (PPP). After establishment of the data link, the data is transferred by the MeterNet Box to the MeterNet Host (step **2006**). After succesful reception, the MeterNet Host triggers the update of the database **2010** with the newly acquired information (step **2007**). If no further information is needed, the data link (step **2008**) and telephone connection (step **2009**) are terminated.

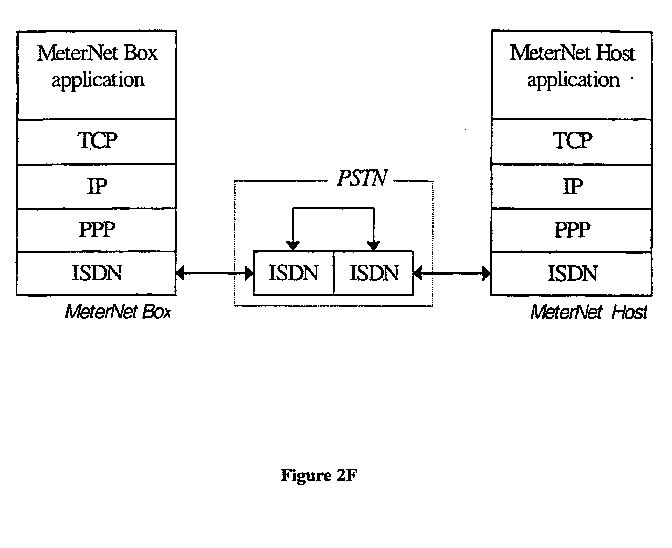

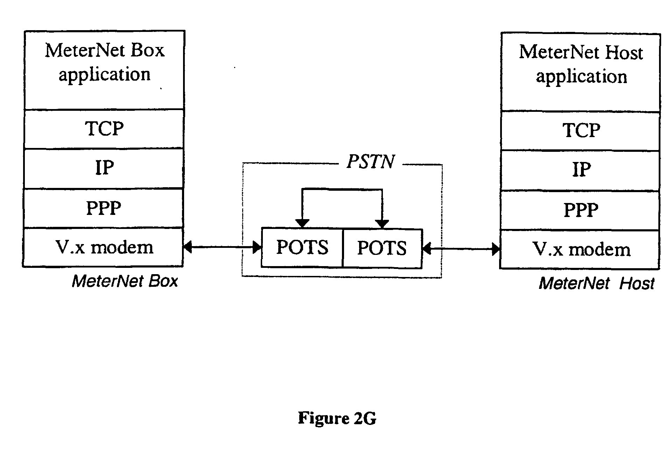

Depending on the type of subscriber loop (POTS or ISDN), the protocol stacks differ. Figure 2F shows the protocol stack for POTS, Figure 2G shows the protocol stack for ISDN. The only difference lies in the physical layer which is a modem in case of POTS, or an ISDN interface directly in case of an ISDN.

A System Control Unit **3002** and a number of Appliance Control Units (**3014, 3005, 3006**) connected to the respective appliances (**3007, 3008, 3009**), and a TeleMail-based Graphical User Interface (GUI) application (**3010**) of the present invention, and the system in which it operates is shown in Figure 3A. The application **3010** runs on the TeleMail device **102**; it provides output on the display **3004**. For reasons of simplicity, in this description the display **3004** has touchscreen capabilities, and thus also functions as input device. This does not rule out other TeleMail device-configurations.

Only for remote access, do both TeleMail **102** and **101** devices need to be connected to the Public Switched Telephone Network **104**.

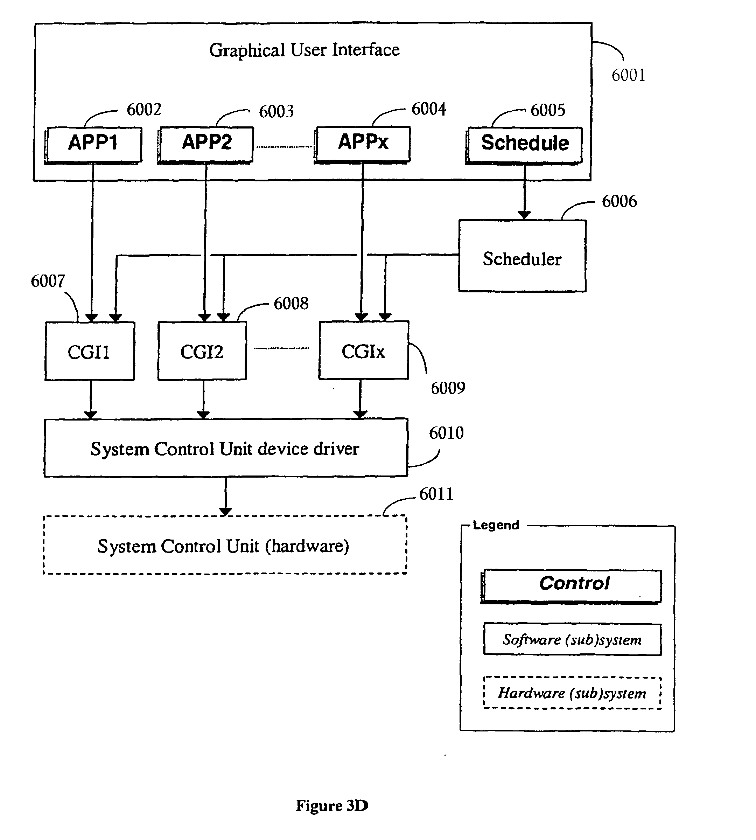

The GUI application **3010** can be configured to suit the needs of the user. The user can add or remove new appliances. The GUI application will provide a control in the GUI screen for each appliance addressed by the TeleControl application; and provide all necessary underlying software modules (see description of Figure 3D). A number of controls is shown in the GUI application **3010** of Figure 3A.

To illustrate the TeleControl functionality, appliance **3007** is considered to be a light bulb. which can be switched on or off. If the user wants to change the state of the light bulb **3007** (e.g. turn it off), he/she can invoke the GUI application **3010**, which contains a control for each appliance addressed by the TeleControl application. The user can then activate the respective control in the GUI screen to perform the desired action.

Activation of the appliance control in the GUI screen will cause the GUI application to invoke a CGI process on the TeleMail device. The CGI process will trigger a message to be sent from the TeleMail device to the System Control Unit **3002**. The System Control Unit will broadcast a message onto the mains network **3003**, destined for Appliance Control Unit **3014**.

The message contains the unique identifier of Appliance Control Unit **3014**, and the instruction that needs to be performed (e.g. "turn off"). Due to the nature of broadcasting all Appliance Control Units (**3014, 3005, 3006**) will receive the message; only Appliance Control Unit **3014** will handle the message, based upon recognition of its identifier.

The user can access the TeleControl application from a remote location by using another TeleMail device **101** to call the TeleMail device at the user premises **102**. Once the telephone connection **1013** through the Public Switched Telephone Network **104** has been established, the user can load the GUI application into a web browser on TeleMail device **101.** Activating the controls in the GUI, has the same effect as accessing them locally (i.e. on TeleMail device **102**), as described above. Attemativety, also a PC can be utilized to communicate with the home TeleMail device.

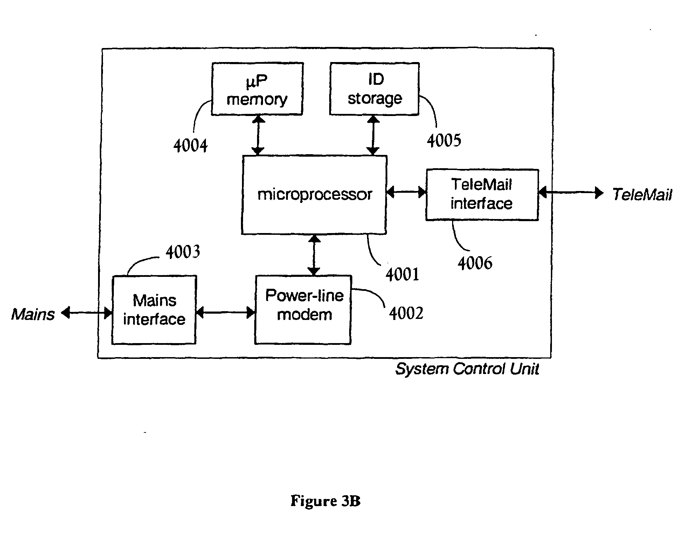

A block diagram of an embodiment of a System Control Unit . according to the present invention, is shown in Figure 3B. Apart from the power-line modem functions **4002** and mains interfacing **4003**, all functions are performed by a microprocessor **4004**. The microprocessor is supported by memory **4004**, which comprises both volatile and non-volatile memory. The microprocessor **4001** has a TeleMail interface **4006** at its disposal which is used to receive command message and transmit report from/to the TeleMail device. The mains interface circuitry **4003** connects to the mains network. The System Control Unit also comprises a storage unit **4005** for a unique permanent network identifier. This identifier is used in combination with the identifiers of the connected Appliance Control Units to uniquely qualify the Appliance Control Units within a home automation network (see below).

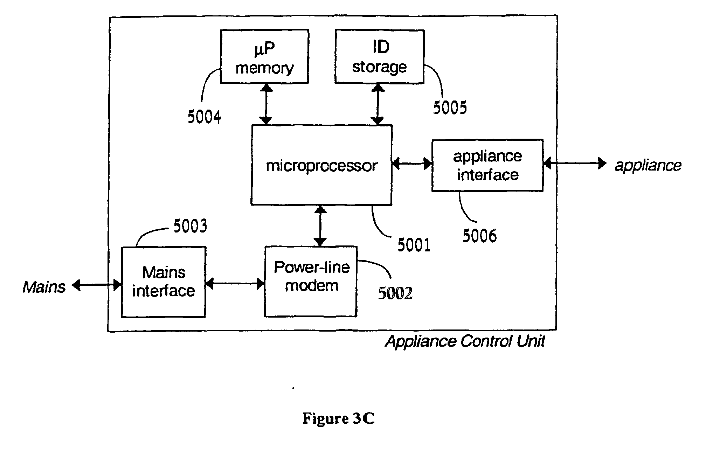

A block diagram of an embodiment of an Appliance Control Unit, according to the present invention, is shown in Figure 3C. Apart from the power-line modem functions **5002** and mains interfacing **5003,** all functions are performed by a microprocessor **5001**. The microprocessor is supported by memory **5004,** which comprises both volatile and non-volatile memory. The microprocessor **5001** has an appliance interface **5006** at its disposal which is used to control the connected appliance. The mains interface circuitry **5003** connects to the mains network. The Appliance Control Unit also comprises a storage unit **5005** for a unique assignable identifier.

An architectural block diagram of the TeleControl application is shown in Figure 3D. The Graphical User Interface **401** consists of controls **(402, 403, 404)** to address appliances connected to the home automation network. It also contains a control to access and configure scheduler **406.** The scheduler **406** provides time-based operations on the appliances such as delayed execution of instructions, or at user defined (fixed or irregular) intervals. The appliance controls invoke a related Common Gateway Interface (CGI) process **(407, 408, 409).** The CGI processes make use of the System Control Unit device driver **410** to control the appliances addressed by the System Control Unit hardware **411.** The scheduler **406** also makes use of the same CGI processes **(407,408,409)** to perform its functions.

## Claims

1. Method for the exchange of one or more e-mail messages between two devices, wherein the passage of the message between both devices is not over the Internet, each device being connected to the Public Switched Telephone Network (104), comprising the steps of:
a) setting up a telephone connection to a receiver (102),
b) acceptance of the call by the receiver (102),
c) establishing the modem or ISDN physical layer connection, a PPP data link layer connection, IP network layer connection, TCP transport layer connection, between a sender (101) and receiver (102),
d) transfer of e-mail message(s) from the sender (101) to the receiver (102) over TCP/IP and SMTP over the connection established in step c),
e) storing of the e-mail message by said receiver (102), and
f) terminating the data-link and telephone connections.

2. Method according to claim 1, comprising the steps of:
a) composing one or more electronic mail messages through a Graphical User Interface, GUI, (501) application associated with the sender (101),
b) indicating by sensual stimulation that an e-mail message has been received by said receiver (102), and
c) presenting the e-mail message using a GUI (501) application associated with receiver (102).

3. Method according to claims 2 or 3, further comprising the step of retrieving the telephone number of the receiver from a database associated with the sender (101).

4. Method according to any of claims 1 to 3 comprising the additional steps of:
a) obtaining the telephone number assigned to said receiver (102) or sender (101),
b) converting said telephone number, including area and country code, into a hexadecimal identifier,
c) extending the converted telephone number with leading zeros if it has a length of less than four bytes, and
d) using the least significant four bytes of the converted telephone number as an alias IP address for use by said sender (101) or receiver (102) for the purpose of TCP/IP communication.

5. Method according to any of claims 1 to 4, wherein the sender is a central host and the receiver also collects information from meters, comprising the steps of:
a) setting up a telephone connection from the central host to the receiver (102);
b) acceptance of the call by the receiver (102),
c) establishing the modem or ISDN physical layer connection, a PPP data link layer connection, IP network layer connection, TCP transport layer connection between the central host and receiver (102),
d) transferring the metering information to the central host device from the receiver (102) over TCP/IP and SMTP in an e-mail message over the connection established in step c),
e) termination of the data link and telephone call, and
f) updating of a metering information database by the central host with the received information.

6. Method according to any of claims 1 to 4, wherein the receiver (102) is a central host and the sender (101) also collects information from meters, comprising the steps of:
a) setting up a telephone connection to the central host by the sender (101);
b) acceptance of the call by the host device,
c) establishing modem or ISDN physical layer connection, a PPP data link layer connection, IP network layer connection, TCP transport layer connection between the central host and sender (101),
d) transferring the metering information to the central host device from the sender (101) over TCP/IP and SMTP in an e-mail message over the connection established in step c),
e) termination of the data link and telephone call, and
f) updating of a metering information database by the central host with the received information.

7. Method according to any of claims 1 to 6, for use in providing remote home appliance control, comprising the steps of:
a) connecting a system control unit (3002) to the receiver (102), and to the in-house mains network (3003),
b) inserting appliance control units (3014, 3005), between the controlled appliances (3007, 3008), and to the in-house mains network (3003),
c) configuring the receiver (102) to receive appliance control instructions from the sender (101), and
d) controlling appliances remotely using the sender (101).

8. Method according to claim 7, wherein said appliances may be activated at user-definable moments, and at user-definable fixed or irregular intervals, said user-definable parameters set using the sender (101).

9. Method according to any of claims 1 to 4, further comprising the step of forwarding an e-mail message obtained from a mail server at the premises of an Internet Service Provider, from the sender (101) to the receiver (102).

10. A device for sending one or more e-mail messages to a receiver device (102), wherein the passage of the message between both devices is not over the Internet, each device being connected to the Public Switched Telephone Network (104) during sending, comprising:
a) a means for setting up a telephone connection with the receiver (102),
b) a means for detecting an acceptance of the call by the receiver (102),
c) a means for establishing the modem or ISDN physical layer connection, a PPP data link layer connection, IP network layer connection, TCP transport layer connection, between the sender (101) and receiver (102).
d) a means for transferring one or more e-mail message(s) from a sender (101) to the receiver (102) over TCP/IP and SMTP over the connection established in step c),
e) a means for terminating the data-link and telephone connections.

11. A device according to claim 10, integrated with a computer having processing and data-storage means.

12. A device for receiving one or more e-mail messages from a sender device (101), wherein the passage of the message between both devices is not over the internet, each device being connected to the Public Switched Telephone Network (104), during receiving comprising:
a) a means for setting up a telephone connection with the sender (101),
b) a means for accepting a call from the sender (101),
c) a means for establishing the modem or ISDN physical layer connection, a PPP data link layer connection, IP network layer connection, TCP transport layer connection, between the sender (101) and receiver (102),
d) a means for receiving one or more e-mail message(s) transferred from the sender (101) to the receiver (102) over TCP/IP and SMTP over the connection established in step c),
e) a means for storing the e-mail message, and
f) a means for terminating the data-link and telephone connections.

13. A device according to claim 12, integrated with a computer having a processing and a data-storage means.

14. A device for controlling home appliances (3007, 3008) connected to appliance control units (3014, 3005) inserted between the appliance(s) and the in-house mains network, comprising:
a) a receiver (102) according to claims 12 and 13,
b) a means for connecting to the in-house mains network (3003), and
c) a system control unit (3002) that is capable of communicating with the appliance control units (3014, 3005).

15. A device comprising a device for sending one or more e-mail messages according to claim 10, and a device for receiving one or more e-mail messages according to claim 12.

16. A GUI computer program comprising code means for performing the method steps of claims 1 to 9.

## Patentansprüche

1. Verfahren für den Austausch einer oder mehrerer E-Mail-Nachrichten zwischen zwei Geräten, wobei das Versenden der Nachrichten zwischen beiden Geräten nicht über das Internet erfolgt und wobei jedes Gerät an das öffentliche Fernsprechwählnetz (104) angeschlossen ist, umfassend folgende Schritte:
a) Herstellen einer Telefonverbindung zu einem Empfänger (102),
b) Entgegennehmen des Anrufs durch den Empfänger (102),
c) Herstellen der Modem- oder ISDN-Bitübertragungsschichtverbindung, einer PPP-Sicherungsschichtverbindung, einer IP-Netzwerkschichtverbindung und einer TCP-Transportschichtverbindung zwischen einem Sender (101) und einem Empfänger (102),
d) Übertragen einer oder mehrerer E-Mail-Nachrichten vom Sender (101) zum Empfänger (102) über TCP/IP und SMTP über die in Schritt c) hergestellte Verbindung,
e) Speichern der E-Mail-Nachricht durch den Empfänger (102) und
f) Beenden der Datenübermittlungs- und Telefonverbindung.

2. Verfahren nach Anspruch 1, umfassend folgende Schritte:
a) Zusammenstellen einer oder mehrerer E-Mail-Nachrichten über eine Anwendung für eine grafische Benutzeroberfläche (501), die dem Sender (101) zugeordnet ist,
b) Anzeigen durch ein wahrnehmbares Signal, dass am Empfänger (102) eine E-Mail-Nachricht angekommen ist,
c) Darstellen der E-Mail-Nachricht mittels einer Anwendung für eine grafische Benutzeroberfläche (501), die dem Empfänger (102) zugeordnet ist.

3. Verfahren nach Ansprüchen 2 und 3, des Weiteren umfassend den Schritt des Abrufens der Telefonnummer des Empfängers aus einer Datenbank, die dem Sender (101) zugeordnet ist.

4. Verfahren nach einem der Ansprüche 1 bis 3, umfassend folgende weitere Schritte:
a) Erhalten der Telefonnummer, die dem Empfänger (102) oder Sender (101) zugeordnet ist,
b) Umwandeln der Telefonnummer einschließlich der Orts- und der Landesvorwahl in einen hexadezimalen Identifikator,
c) Erweitern der umgewandelten Telefonnummer um vorangestellte Nullen, wenn die Telefonnummer eine Länge von weniger als vier Bytes aufweist, und
d) Verwenden der am wenigsten signifikanten vier Bytes der umgewandelten Telefonnummer als eine Alias-IP-Adresse zur Verwendung durch den Sender (101) oder Empfänger (102) zum Zweck der TCP/IP-Kommunikation.

5. Verfahren nach einem der Ansprüche 1 bis 4, wobei der Sender ein zentraler Host ist und der Empfänger außerdem Informationen von Zählern erfasst, umfassend folgende Schritte:
a) Herstellen einer Telefonverbindung von dem zentralen Host zu dem Empfänger (102),
b) Entgegennehmen des Anrufs durch den Empfänger (102),
c) Herstellen der Modem- oder ISDN-Bitübertragungsschichtverbindung, einer PPP-Sicherungsschichtverbindung, einer IP-Netzwerkschichtverbindung und einer TCP-Transportschichtverbindung zwischen dem zentralen Host und dem Empfänger (102),
d) Übertragen der Zählerinformationen an das Gerät des zentralen Hosts vom Empfänger (102) über TCP/IP und SMTP in einer E-Mail-Nachricht über die in Schritt c) hergestellte Verbindung,
e) Beenden der Datenübermittlung und des Telefonanrufes und
f) Aktualisieren einer Zählerinformationsdatenbank durch den zentralen Host mit den empfangenen Informationen.

6. Verfahren nach einem der Ansprüche 1 bis 4, wobei der Empfänger (102) ein zentraler Host ist und der Sender (101) außerdem Informationen von Zählern erfasst, umfassend folgende Schritte:
a) Herstellen einer Telefonverbindung zu dem zentralen Host durch den Sender (101),
b) Entgegennehmen des Anrufs durch das Host-Gerät,
c) Herstellen der Modern- oder ISDN-Bitübertragungsschichtverbindung, einer PPP-Sicherungsschichtverbindung, einer IP-Netzwerkschichtverbindung und einer TCP-Transportschichtverbindung zwischen dem zentralen Host und dem Sender (101),
d) Übertragen der Zählerinformationen an das Gerät des zentralen Hosts vom Sender (101) über TCP/IP und SMTP in einer E-Mail-Nachricht über die in Schritt c) hergestellte Verbindung,
e) Beenden der Datenübermittlung und des Telefonanrufes und
f) Aktualisieren einer Zählerinformationsdatenbank durch den zentralen Host mit den empfangenen Informationen.

7. Verfahren nach einem der Ansprüche 1 bis 6 zur Verwendung bei einer Haushaltgeräte-Fernsteuerung, umfassend die folgenden Schritte:
a) Verbinden einer Systemsteuerungseinheit (3002) mit einem Empfänger (102) und dem häuslichen Stromnetz (3003),
b) Einfügen von Gerätesteuerungseinheiten (3014, 3005) zwischen die gesteuerten Geräte (3007, 3008) und das häusliche Stromnetz (3003),
c) Konfigurieren des Empfängers (102) auf den Empfang von Gerätesteuerungsbefehlen vom Sender (101) und
d) Fernsteuern von Geräten mittels des Senders (101).

8. Verfahren nach Anspruch 7, wobei die Geräte in vom Benutzer definierbaren Momenten und in vom Benutzer definierbaren festen oder unregelmäßigen Intervallen aktiviert werden können, wobei diese vom Benutzer definierbaren Parameter mittels des Senders (101) eingestellt werden.

9. Verfahren nach einem der Ansprüche 1 bis 4, des Weiteren umfassend den Schritt des Weiterleitens einer E-Mail-Nachricht, die von einem Mail-Server am Standort des Internet-Service-Providers erhalten wurde, vom Sender (101) zum Empfänger (102).

10. Gerät zum Versenden einer oder mehrerer E-Mail-Nachrichten an ein Empfängergerät (102), wobei das Versenden der Nachricht zwischen beiden Geräten nicht über das Internet erfolgt und wobei jedes Gerät während des Versendens an das öffentliche Fernsprechwählnetz (104) angeschlossen ist, umfassend:
a) ein Mittel zum Herstellen einer Telefonverbindung zu dem Empfänger (102),
b) ein Mittel zum Erkennen einer Entgegennahme des Anrufs durch den Empfänger (102),
c) ein Mittel zum Herstellen der Modem- oder ISDN-Bitübertragungsschichtverbindung, einer PPP-Sicherungsschichtverbindung, einer IP-Netzwerkschichtverbindung und einer TCP-Transportschichtverbindung zwischen dem Sender (101) und dem Empfänger (102),
d) ein Mittel zum Übertragen einer oder mehrerer E-Mail-Nachrichten von einem Sender (101) zum Empfänger (102) über TCP/IP und SMTP über die in Schritt c) hergestellte Verbindung,
e) ein Mittel zum Beenden der Datenübermittlungs- und Telefonverbindung.

11. Gerät nach Anspruch 10, das in einen Computer, der mit Verarbeitungs- und Datenspeichermitteln ausgerüstet ist, integriert ist.

12. Gerät zum Empfangen einer oder mehrerer E-Mail-Nachrichten von einem Sendegerät (101), wobei das Versenden der Nachricht zwischen beiden Geräten nicht über das Internet erfolgt und wobei jedes Gerät während des Empfangens an das öffentliche Fernsprechwählnetz (104) angeschlossen ist, umfassend:
a) ein Mittel zum Herstellen einer Telefonverbindung mit dem Sender (101),
b) ein Mittel zum Entgegennehmen eines Anrufs von dem Sender (101),
c) ein Mittel zum Herstellen der Modem- oder ISDN-Bitübertragungsschichtverbindung, einer PPP-Sicherungsschichtverbindung, einer IP-Netzwerkschichtverbindung und einer TCP-Transportschichtverbindung zwischen dem Sender (101) und dem Empfänger (102),
d) ein Mittel zum Empfangen einer oder mehrerer E-Mail-Nachrichten, die vom Sender (101) zum Empfänger (102) über TCP/IP und SMTP über die in Schritt c) hergestellte Verbindung übertragen werden,
e) ein Mittel zum Speichern der E-Mail-Nachricht und
f) ein Mittel zum Beenden der Datenübermittlungs- und Telefonverbindung.

13. Gerät nach Anspruch 12, das in einen Computer, der mit Verarbeitungs- und Datenspeichermitteln ausgerüstet ist, integriert ist.

14. Gerät zum Steuern von Haushaltgeräten (3007, 3008), die an Gerätesteuerungseinheiten (3014, 3005) angeschlossen sind, welche zwischen das oder die Geräte und das häusliche Stromnetz eingefügt sind, umfassend:
a) einen Empfänger (102) nach den Ansprüchen 12 und 13,
b) ein Mittel zum Anschluss an das häusliche Stromnetz (3003) und
c) eine Systemsteuerungseinheit (3002), die mit den Gerätesteuerungseinheiten (3014, 3005) kommunizieren kann.

15. Gerät, das ein Gerät zum Versenden einer oder mehrerer E-Mail-Nachrichten nach Anspruch 10 sowie ein Gerät zum Empfangen einer oder mehrerer E-Mail-Nachrichten nach Anspruch 12 umfasst.

16. Computerprogramm für eine grafische Benutzeroberfläche, das Codemittel zum Ausführen der Schritte des Verfahrens nach den Ansprüchen 1 bis 9 umfasst.

## Revendications

1. Procédé d'échange d'un ou de plusieurs messages de courrier électronique entre deux dispositifs, dans lequel le passage du message entre les deux dispositifs n'a pas lieu sur Internet, chaque dispositif étant connecté au réseau téléphonique public commuté (104), comprenant les étapes consistant à:
a) établir une connexion téléphonique avec un récepteur (102),
b) accepter l'appel par le récepteur (102),
c) établir la connexion par modem ou couche physique RNIS, une connexion par couche liaison de données PPP, une connexion par couche réseau IP, une connexion par couche transport TCP, entre un émetteur (101) et un récepteur (102),
d) transférer un/des message(s) de courrier électronique depuis l'émetteur (101) vers le récepteur (102) par TCP/IP et SMTP par l'intermédiaire de la connexion établie à l'étape c),
e) stocker le message de courrier électronique par ledit récepteur (102), et
f) terminer les connexions par liaison de données et téléphoniques.

2. Procédé selon la revendication **1,** comprenant les étapes consistant à :
a) composer un ou plusieurs messages de courrier électronique par l'intermédiaire d'une application d'interface utilisateur graphique, GUI pour Graphical User interface, (501) associée à l'émetteur (101),
b) indiquer par stimulation sensorielle qu'un message de courrier électronique a été reçu par ledit récepteur (102), et
c) présenter le message de courrier électronique en utilisant une application de GUI (501) associée au récepteur (102).

3. Procédé selon les revendications 2 et 3, comprenant en outre l'étape consistant à récupérer le numéro de téléphone du récepteur à partir d'une base de données associée au récepteur (101).

4. Procédé selon l'une quelconque des revendications 1 à 3, comprenant les étapes supplémentaires consistant à :
a) obtenir le numéro de téléphone affecté audit récepteur (102) ou émetteur (101),
b) convertir ledit numéro de téléphone, y compris l'indicatif régional et du pays, en un identifiant hexadécimal,
c) étendre le numéro de téléphone converti avec des zéros à gauche s'il a une longueur de moins de 4 octets, et
d) utiliser les quatre octets les moins importants du numéro de téléphone converti comme adresse IP pseudonymique à utiliser par ledit émetteur (101) ou récepteur (102) à des fins de communication TCP/IP.

5. Procédé selon l'une quelconque des revendications 1 à 4, dans lequel l'émetteur est un hôte central et le récepteur recueille également des informations à partir de compteurs, comprenant les étapes consistant à :
a) établir une connexion téléphonique à partir de l'hôte central vers le récepteur (102),
b) accepter l'appel par le récepteur (102),
c) établir la connexion par modem ou couche physique RNIS, une connexion par couche liaison de données PPP, une connexion par couche réseau IP, une connexion par couche transport TCP, entre l'hôte central et le récepteur (102),
d) transférer les informations de comptage au dispositif de l'hôte central à partir du récepteur (102) par TCP/IP et SMTP dans un message de courrier électronique par l'intermédiaire de la connexion établie à l'étape c),
e) terminer la liaison de données et l'appel téléphonique, et
f) mettre à jour une base de données d'informations de comptage par l'hôte central avec les informations reçues.

6. Procédé selon l'une quelconque des revendications 1 à 4, dans lequel le récepteur (102) est un hôte central et l'émetteur (101) recueille également des informations à partir de compteurs, comprenant les étapes consistant à :
a) établir une connexion téléphonique vers l'hôte central par l'émetteur (101),
b) accepter l'appel par le dispositif hôte,
c) établir la connexion par modem ou couche physique RNIS, une connexion par couche liaison de données PPP, une connexion par couche réseau IP, une connexion par couche transport TCP, entre l'hôte central et l'émetteur (101),
d) transférer les informations de comptage au dispositif de l'hôte central à partir de l'émetteur (101) par TCP/IP et SMTP dans un message de courrier électronique par l'intermédiaire de la connexion établie à l'étape c),
e) terminer la liaison de données et l'appel téléphonique, et
f) mettre à jour une base de données d'informations de comptage par l'hôte central avec les informations reçues.

7. Procédé selon l'une quelconque des revendications 1 à 6, pour utilisation dans la fourniture de commande d'appareils ménagers à distance, comprenant les étapes consistant à :
a) connecter une unité de commande de système (3002) au récepteur (102), et au réseau secteur interne (3003),
b) insérer des unités de commande d'appareils (3014, 3015) entre les appareils commandés (3007, 3008) et le réseau secteur interne (3003),
c) configurer le récepteur (102) pour recevoir les instructions de commande d'appareils à partir de l'émetteur (101), et
d) commander les appareils à distance en utilisant l'émetteur (101 ).

8. Procédé selon la revendication 7, dans lequel lesdits appareils peuvent être activés à des moments pouvant être définis par l'utilisateur et à des intervalles fixés ou irréguliers pouvant être définis par l'utilisateur, lesdits paramètres pouvant être définis par l'utilisateur étant réglés en utilisant l'émetteur (101).

9. Procédé selon l'une quelconque des revendications 1 à 4, comprenant en outre l'étape consistant à transférer un message de courrier électronique obtenu à partir d'un serveur de courrier électronique aux locaux d'un fournisseur de services Internet, depuis l'émetteur (101) vers le récepteur (102).

10. Dispositif pour envoyer un ou de plusieurs messages de courrier électronique à un dispositif récepteur (102), dans lequel le passage du message entre les deux dispositifs n'a pas lieu sur Internet, chaque dispositif étant connecté au réseau téléphonique public commuté (104) pendant l'envoi, comprenant :
a) un moyen d'établissement d'une connexion téléphonique avec le récepteur (102),
b) un moyen de détection d'une acceptation de l'appel par le récepteur (102),
c) un moyen d'établissement de la connexion par modem ou couche physique RNIS, d'une connexion par couche liaison de données PPP, d'une connexion par couche réseau IP, d'une connexion par couche transport TCP, entre l'émetteur (101) et le récepteur (102),
d) un moyen de transfert d'un ou de plusieurs message(s) de courrier électronique depuis un émetteur (101) vers le récepteur (102) par TCP/IP et SMTP par l'intermédiaire de la connexion établie à l'étape c),
e) un moyen de terminaison des connexions par liaison de données et téléphoniques.

11. Dispositif selon la revendication 10, intégré dans un ordinateur possédant des moyens de traitement et de stockage de données.

12. Dispositif pour recevoir un ou de plusieurs messages de courrier électronique à partir d'un dispositif émetteur (101), dans lequel le passage du message entre les deux dispositifs n'a pas lieu sur Internet, chaque dispositif étant connecté au réseau téléphonique public commuté (104) pendant la réception, comprenant :
a) un moyen d'établissement d'une connexion téléphonique avec l'émetteur (101),
b) un moyen d'acceptation d'un appel par l'émetteur (101),
c) un moyen d'établissement de la connexion par modem ou couche physique RNIS, d'une connexion par couche liaison de données PPP, d'une connexion par couche réseau IP, d'une connexion par couche transport TCP, entre l'émetteur (101) et le récepteur (102),
d) un moyen de réception d'un ou de plusieurs message(s) de courrier électronique transférés depuis l'émetteur (101) vers le récepteur (102) par TCP/IP et SMTP par l'intermédiaire de la connexion établie à l'étape c),
e) un moyen de stockage du message de courrier électronique, et
f) un moyen de terminaison des connexions par liaison de données et téléphoniques.

13. Dispositif selon la revendication 12, intégré dans un ordinateur possédant des moyens de traitement et de stockage de données.

14. Dispositif pour la commande d'appareils ménagers (3007, 3008) connectés à des unités de commande d'appareils (3014, 3005) insérées entre le/les appareil(s) et le réseau secteur interne, comprenant :
a) un récepteur (102) selon les revendications 12 et 13,
b) un moyen de connexion au réseau secteur interne (3003), et
c) une unité de commande de système (3002) capable de communiquer avec les unités de commande d'appareils (3014, 3005).

15. Dispositif comprenant un dispositif pour envoyer un ou plusieurs messages de courrier électronique selon la revendication 10, et un dispositif pour recevoir un ou plusieurs messages de courrier électronique selon la revendication 12.

16. Programme informatique de GUI comprenant un moyen de code pour réaliser les étapes de procédé des revendications 1 à 9.
